# EUROPÄISCHE PATENTSCHRIFT

(11) **EP 1 548 069 B1**
(45) Veröffentlichungstag und Bekanntmachung des Hinweises auf die Patenterteilung: **04.08.2010**
(21) Anmeldenummer: 04027513.3
(22) Anmeldetag: 19.11.2004
(51) Int. Cl.: C09B 67/26, C09B 67/22, D21H 21/28

(54) **Flüssigformulierungen von Direktfarbstoffen**
Liquid formulations of direct dyes
Formulations liquides de colorants directs

(30) Priorität: 22.12.2003 EP 03029578
(43) Veröffentlichungstag der Anmeldung: 29.06.2005
(73) Patentinhaber: BASF SE, 67056 Ludwigshafen (DE)
(72) Erfinder: Decker, Jürgen Dr., 54292 Trier (DE); Nordmann, Gero, Dr., 67065 Mundenheim (DE); Klopp, Ingo, Dr., 67256 Weisenheim (DE); Schröder, Gunter-Rudolf, Dr., 68259 Mannheim (DE); Reichelt, Helmut, Dr., 67435 Neustadt (DE); Bomba, Christoph, Dr., 68161 Mannheim (DE)

(56) Entgegenhaltungen:
- EP-A- 0 122 224
- EP-A- 0 270 003
- EP-A- 1 258 562
- CH-A- 642 100
- DE-A- 2 820 487
- DE-A- 3 046 450
- GB-A- 1 480 712
- GB-A- 2 164 348
- US-A- 3 679 353
- US-A- 4 310 331
- US-A- 4 560 745
- US-A- 5 041 539
- DATABASE WPI Section Ch, Week 197725 Derwent Publications Ltd., London, GB; Class E16, AN 1977-44339Y XP002283212 & JP 52 057234 A (NIPPON CHEM WORKS) 11. Mai 1977 (1977-05-11)

## Beschreibung

Die vorliegende Erfindung betrifft wässrige Flüssigformulierungen enthaltend

| | |
|---|---|
| 5-25 Gew.-% | einer Farbstoffzusammensetzung umfassend 70-95 Gew.-% eines Farbstoffes erhältlich durch Reduktion oder thermische Behandlung von Direct Yellow 11 und dessen Bunttonwinkel auf gebleichtem Zellstoff im Farbraum im Bereich von 55 bis 75 liegt 1-30 Gew.-% eines blauen Direktfarbstoffes und 0-20 Gew.-% eines roten Direktfarbstoffes jeweils bezogen auf die Farbstoffzusammensetzung |
| 1-15 Gew.-% | eines gesättigten, cyclischen oder acyclischen wasserlöslichen Amins, das eine primäre, sekundäre oder tertiäre Aminogruppe und wenigstens eine weitere funktionelle Gruppe, ausgewählt unter primären, sekundären und tertiären Aminogruppen, OH-Gruppen und E-thergruppen aufweist und |
| 1-30 Gew.-% | Harnstoff |

bezogen auf das Gesamtgewicht der wässrigen Flüssigformulierung, wobei die Gesamtmenge aus wasserlöslichem Amin und Harnstoff 40 Gew.-% nicht übersteigt, sowie ihre Verwendung zum Färben von Cellulosematerial insbesondere Papier und Karton.

Für die Herstellung von Verpackungsmaterial werden Braunfarbstoffe benötigt, die einen hellbraunen, nur in einem engen Bereich variierenden Farbton aufweisen. Das Braun kann dabei ein synthesebedingtes Farbstoffgemisch sein, wie im Fall von Basic Brown 1, oder eine Farbstoffmischung aus einem Gelbfarbstoff, einem Blaufarbstoff und gegebenenfalls einem Rotfarbstoff. Farbstoffmischungen haben den großen Vorteil, dass eine Nuancierung des Farbtons leichter möglich ist. Problematisch ist es jedoch, lagerstabile Flüssigformulierungen dieser Farbstoffmischungen zu erhalten.

Schlechte Lagerstabilität von Flüssigformulierungen resultiert aus der oftmals begrenzten Löslichkeit der Farbstoffe in Wasser, da diese wiederum meist mit einer erwünschten hohen Affinität zur Faser einhergeht. Während dies für die in der Papiermaschine vorliegenden Farbstoffkonzentrationen aufgrund der niedrigen Konzentration keine Auswirkung hat, kann es für die im Handel immer beliebteren Flüssigformulierungen große Auswirkungen haben. Oftmals ergeben sich Probleme mit der Lagerstabilität der Flüssigformulierung, wenn die Fässer längere Zeit gelagert werden müssen. Dabei können sowohl Kälte wie auch Hitze zu Niederschlägen führen, die nicht nur kritisch für die Dosierpumpen sein können sondern auch zur Stippenbildung oder ungleichmäßigen Färbungen des Papiers führen können. Noch problematischer wird die Lagerstabilität bei Farbstoffmischungen, da hier mehrere Farbstoffe gleichzeitig in Lösung gehalten werden müssen.

Um generell die Löslichkeit einer Farbstoffformulierung zu verbessern, werden in der Regel löslichkeitsverbessernde Zusätze gewählt, die oftmals auch als Gegenion der Farbstoffsäuren dienen. Als löslichkeitsverbessernde Zusätze sind die verschiedensten Stoffklassen bekannt wie Alkohole, Mono-, Oligo- oder Polyalkylenglykole, Lactame, Amine und Amide.

Die EP 1 258 562 beschreibt Braunmischungen mit Direct Yellow 11 sowie mit Direct Orange 15, die jedoch keinerlei löslichkeitsverbessernde Zusätze enthalten.

Die GB-A-2 164 348 lehrt lagerstabile Flüssigformulierungen von Direct Yellow 11 durch seine Umsetzung mit Di- und Triethanolamin.

Der DE-A-30 46 450 ist die Herstellung von Direktgelb 11 aus 4-Nitrotoluol-2-sulfonsäure in Gegenwart von Ethanolamin und Lithiumhydroxid zu entnehmen. Anschließend wird die Mischung mit Harnstoff versetzt.

Die CH-A-642 100 lehrt die Stabilisierung der Flüssigformulierung des Farbstoffes der Formel 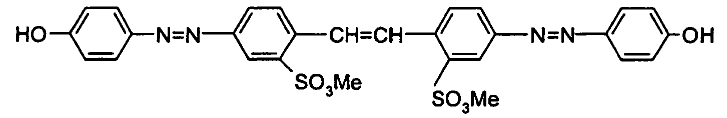 durch Kaliumhydroxid oder Alkanolamin.

Die JP 52057234 lehrt die Stabilisierung von Flüssigformulierungen von Stilbenazofarbstoffen wie Direct Yellow 11 mit Harnstoff oder alkylsubstituierten Harnstoffen.

Für die Herstellung von Verpackungsmaterial, war es nun das Ziel, dem jeweiligen Papierhersteller speziell für seinen Rohzellstoff fertig abgemischte Braunmischungen anzubieten. Das hat für ihn den Vorteil, dass er zum einen nicht selber mischen muss und zum anderen nur noch die eine Braunfarbstoffmischung lagern muss. Damit wurde die Lagerstabilität der braunen wässrigen Flüssigformulierungen zur zentralen Aufgabe der vorliegenden Erfindung. Da die braune Flüssigformulierung ausgehend von einer gelb/orangen Flüssigformulierung hergestellt wird, die mit Rot und Blau abgetönt wird, muss auch die gelb/orange Flüssigformulierung eine hohe Lagerstabilität aufweisen. Darüberhinaus müssen die der gelb/orangen Flüssigformulierung zugesetzten Hilfsmittel auch in der braunen Flüssigformulierung stabilisierend wirken, da ihre Abtrennung nicht praktikabel wäre.

Der vorliegenden Erfindung lag somit eine Flüssigformulierung als Aufgabe zugrunde, die sowohl für den gelb/orangen Farbstoff wie auch für die braune Farbstoffzusammensetzung eine verbesserte Lagerstabilität sowohl bei kalter wie auch bei warmer Lagerung aufweist.

Demgemäss wurden die obengenannten Flüssigformulierungen gefunden.
Bevorzugt übersteigt die Gesamtmenge aus wasserlöslichem Amin und Harnstoff 30 Gew.-% nicht.

Die Gew.-% Angaben der Farbstoffe beziehen sich jeweils auf den Farbstoff berechnet in Form seiner freien Säure. Die Farbstoffe liegen in der Flüssigformulierung in Form ihrer Salze vor. Die durch Umsetzung von Direct Yellow 11 erhaltenen Farbstoffe haben bevorzugt als Gegenionen Alkaliionen wie Natrium-, Kalium- und insbesondere Lithiumionen.

Sowohl Direct Yellow 11 als auch Direct Orange 15 sind Stilbenfarbstoffe. Direct Yellow 11 wird als Produkt der Selbstkondensation von 5-Nitro-o-toluolsulfonsäure in wässrig alkalischem Medium erhalten. Seine Umsetzung mit Reduktionsmitteln wie Glucose oder Natriumsulfid führt zu Direct Orange 15 (C.I. 40002 bzw. 40003). Diese Farbstoffe sind Mischungen von Farbstoffen unbestimmter Konstitution. Unter Direct Orange 15 versteht der Fachmann Mischungen, deren Bunttonwinkel nach CIELAB auf gebleichtem Zellstoff sich im Farbraum im Bereich von 45 bis <55 bewegt. Reduziert man Direct Yellow 11 unterstöchiometrisch in Bezug auf die Nitrotoluolsulfonsäure, so erhält man Farbstoffgemische mit einem gelborangen Farbton. Man bezeichnet diese bathochrome Verschiebung des Farbtons auch als "Verrötung" von Direct Yellow 11. Eine solche Verrötung des Farbtons lässt sich auch durch thermische Behandlung von Direct Yellow 11 erreichen.

Die gelborangen Farbstoffe, im folgenden auch als teilverrötete Farbstoffe bezeichnet, sind erhältlich durch Reduktion oder thermische Behandlung von Direct Yellow 11, ihr Bunttonwinkel auf gebleichtem Zellstoff liegt im Farbraum im Bereich von 55 bis 75, insbesondere im Bereich von 55 bis 65.

Der rote bzw. blaue Direktfarbstoff ist jeweils ein anionischer direktziehender Farbstoff. Unter Blau ist dabei ein Absorptionsmaximum im Wellenlängenbereich von 560 bis 650 nm zu verstehen. Unter Rot ist ein Absorptionsmaximum im Wellenlängenbereich von 490 bis 540 zu verstehen.

Bevorzugt werden blaue Direktfarbstoffe wie Direct Blue 71, 199, 218, 267, 273, 273 als Kupferkomplex, 279, 281 und 290. Insbesonders werden Direct Blue 15, 279, 281, 290 und die Farbstoffe der Formeln I, II und III bevorzugt.

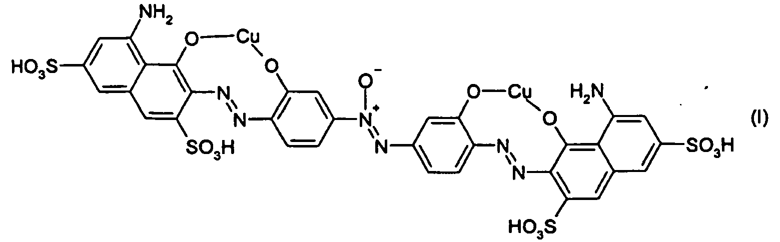

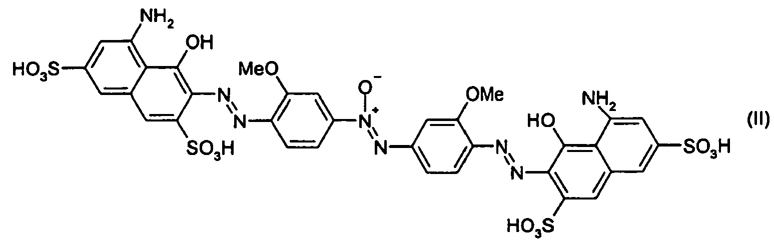

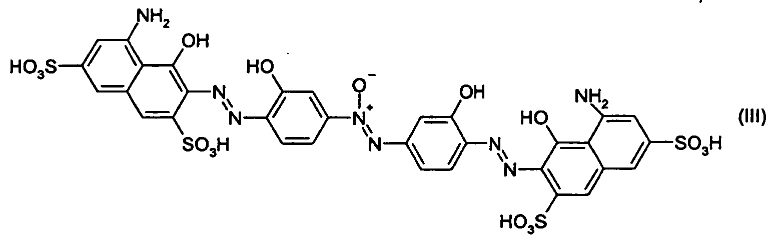

Ebenfalls bevorzugt werden rote Direktfarbstoffe wie Direct Red 80, 81, 239, 253, 254 und 262.

Je nach gewünschtem Braunfarbton ist es möglich, zusätzlich mit einem Orangefarbstoff abzutönen. In der Regel wird man dies jedoch nicht machen, da mit den teilverröteten Farbstoffen und gegebenenfalls dem roten Direktfarbstoff sich alle Nuancen erzielen lassen.

Bevorzugt werden wässrige Flüssigformulierungen, deren Farbstoffzusammensetzung

| | |
|---|---|
| 70-95 Gew.-% | teilverrötetes Direct Yellow 11, |
| 5-30 Gew.-% | eines blauen Direktfarbstoffes und |
| 0-20 Gew.-% | eines roten Direktfarbstoffes umfasst. |

Besonders bevorzugt werden wässrige Flüssigformulierungen, deren Farbstoffzusammensetzung

| | |
|---|---|
| 70-95 Gew.-% | teilverrötetes Direct Yellow 11, |
| 5-20 Gew.-% | eines blauen Direktfarbstoffes und |
| 0-15 Gew.-% | bevorzugt 0-12 Gew.-% eines roten Direktfarbstoffes umfasst. |

Ganz besonders bevorzugt werden wässrige Flüssigformulierungen, deren Farbstoffzusammensetzung

| | |
|---|---|
| 70-95 Gew.-% | teilverrötetes Direct Yellow 11 |
| 5-15 Gew.-% | eines Farbstoffes ausgewählt unter Direct Blue 15, 273, 279, 281, 290 und den Farbstoffen der Formel I, II und III und |
| 0-15 Gew.-% | bevorzugt 0-12 Gew.-% eines Farbstoffes ausgewählt unter Direct Red 81, 239 und 254 umfasst. |

Man erreicht eine Verrötung von Direct Yellow 11 beispielsweise durch seine Umsetzung mit Formaldehyd oder durch basische Kondensation von 5-Nitrotoluolsulfonsäure in Gegenwart von Formaldehyd. Ferner erzielt man eine Verrötung durch Zugabe von Glucose oder Natriumsulfid. Weitere Verrötungsreaktionen sind dem Colour Index und der darin zitierten Literatur zu den Farbstoffen C.I. 40001, 40002, 40003 zu entnehmen.

Bevorzugt werden Farbstoffe, die durch Umsetzung von Direct Yellow 11 mit einem organischen Reduktionsmittel erhalten werden. Organische Reduktionsmittel sind beispielsweise Hydroxyaldehyde wie Pentosen, Hexosen und Heptosen, bevorzugt Glucose.

Die teilverröteten Farbstoffe sind erhältlich durch unterstöchiometrische Reduktion bezogen auf die Nitrotoluolsulfonsäure.

Besonders bevorzugte teilverrötete Farbstoffe werden erhalten durch Umsetzung von Direct Yellow 11 mit 0,05 bis 0,3 Mol, bevorzugt 0,1 bis 0,25 Mol Hydroxyaldehyd, insbesondere Glucose, pro Mol eingesetzte Nitrotoluolsulfonsäure. Bei Erreichen des gewünschten Farbtons kann die Verrötungsreaktion durch Neutralstellen und Abkühlen gestoppt werden.

Die Herstellung von Direct Yellow 11 ist allgemein bekannt. Direct Yellow 11 wird durch Erwärmen einer alkalischen wässrigen Lösung von Nitrotoluolsulfonsäure erhalten. Durch die Umsetzung von Nitrotoluolsulfonsäure mit einem Alkalihydroxid wie Natriumoder bevorzugt Lithiumhydroxid bildet sich zuerst das Salz der Nitrotoluolsulfonsäure, welches im Basischen beim Erwärmen auf 40 - 80°C zum Azostilbenfarbstoff kondensiert.

Bevorzugt setzt man der Mischung vor der Kondensation noch ein wasserlösliches Amin (A), bevorzugt ein Alkanolamin (A), in einer Menge von 0,1 bis 0,5 Mol Alkanolamin (A) pro Mol Nitrotoluolsulfonsäure zu. Alkanolamine (A) sind beispielsweise Ethanolamin, Isopropanolamin oder bevorzugt Diethanolamin. Vermutlich wirkt ein solcher Zusatz lösungsvermittelnd auf Reaktionszwischenstufen.

Nach erfolgter Kondensation und Abkühlen wird das alkalische Gemisch annähernd neutral gestellt, beispielsweise mit Essigsäure. Unter Neutralstellen sind im Rahmen dieser Anmeldung pH-Werte im Bereich von 7 bis 9 zu verstehen.

Nach einer bevorzugten Variante setzt man zur Herstellung des teilverröteten Farbstoffs ein Direct Yellow 11 ein, das erhältlich ist durch Umsetzen von 1 Mol Nitrotoluolsulfonsäure mit 1,4 bis 1,8 Mol Lithiumhydroxid, Zugabe von 0,1 bis 0,5 Mol Alkanolamin, Erwärmen des Reaktionsgemisches auf 40 bis 80°C und Neutralstellen.

Nach einer besonders bevorzugten Variante werden die Herstellung von Direct Yellow 11 und der Verrötungsschritt ohne Zwischenisolierung von Direct Yellow 11 durchgeführt. Der teilverrötete Farbstoff ist dann direkt erhältlich durch Umsetzung von 1 Mol Nitrotoluolsulfonsäure mit 1,4 bis 1,8 Mol Lithiumhydroxid, Zugabe von 0,1 bis 0,5 Mol Alkanolamin, Erwärmen des Reaktionsgemisches auf 40 bis 80°C, Umsetzen mit 0,05 bis 0,3 Mol Glucose bezogen auf ein Mol eingesetzte Nitrotoluolsulfonsäure und Neutralstellen.

Besonders bevorzugt ist eine Arbeitsweise, bei der man während der Kupplung und Reduktion die Temperatur kontinuierlich in linearer oder nichtlinearer Weise erhöht oder periodisch erhöht. Die Temperaturdifferenz zwischen dem Beginn der Kupplung und dem Ende der Reduktion kann bis zu 40 K betragen. Im Allgemeinen beträgt diese Differenz 15 bis 25 K.

Erfindungsgemäß enthält die wässrige Flüssigformulierung wenigstens ein oben definiertes wasserlösliches Amin in einer Menge von 1 - 15 Gew.-% bezogen auf das Gesamtgewicht der Flüssigformulierung. Unter wasserlöslichen Aminen sind Verbindungen zu verstehen, die bei 25°C eine Löslichkeit von >100 g/L Wasser aufweisen. Die erfindungsgemäß eingesetzten wasserlöslichen Amine werden bevorzugt ausgewählt aus der Gruppe umfassend Ethanolamin, Ethylendiamin, N,N-Dimethylethylendiamin, Dimethylethanolamin, N-Methyldiethanolamin, Monomethylethanolamin, 2-(2-Aminoethoxy)ethanol, Aminoethylethanolamin, Morpholin, N-Methylmorpholin, N-Ethylmorpholin, Dimethylaminopropylamin, Methoxypropylamin, N-Aminopropylmorpholin, N,N-Dimethylcyclohexylamin, Pentamethyldiethylentriamin, Tetramethylbis(aminoethyl)ether, Tetramethyldipropylentriamin, Pentamethyldipropylentriamin, Benzyldimethylamin, Diethylentriamin, Triethylentetramin und Tetraethylenpentamin.

Besonders bevorzugt umfasst das wasserlösliche Amin Ethanolamin und gegebenenfalls ein oder mehrere davon verschiedenen Amine (A), insbesondere ein Alkanolamin und speziell Diethanolamin. In einer ersten Ausführungsform umfasst das wasserlösliche Amin zu wenigstens >90 Gew.-%, bezogen auf die Gesamtmenge an wasserlöslichem Amin, Ethanolamin. In einer anderen bevorzugten Ausführungsform umfasst das wasserlösliche Amin 60 bis 90 Gew.-% Alkanolamin und 10 bis 40 Gew.-% eines von Ethanolamin verschiedenen wasserlöslichen Amins (A).

Bevorzugt werden wässrige Flüssigformulierungen umfassend 10-25 Gew.-% Farbstoffzusammensetzung, 2-10 Gew.-% des wasserlöslichen Amins und 1-25 bevorzugt 1-10 Gew.-% Harnstoff bezogen auf das Gesamtgewicht der wässrigen Flüssigformulierung, wobei die Gesamtmenge aus wasserlöslichem Amin und Harnstoff 40 Gew.-% vorzugsweise 30 Gew.-% nicht übersteigt. Besonders bevorzugt werden wässrige Flüssigformulierungen umfassend 15-20 Gew.-% Farbstoffzusammensetzung speziell die bevorzugten Farbstoffzusammensetzungen, 5-8 Gew.-% des wasserlöslichen Amins und 4-15 bevorzugt 4-6 Gew.-% Harnstoff.

Synthesebedingt kann, wie oben erwähnt, ein Teil des in der Flüssigformulierung enthaltenen wasserlöslichen Amins bei der Herstellung des Direct Yellow 11 zugegeben werden. In diesem Fall handelt es sich vorzugsweise um ein von Ethanolamin verschiedenes Amin (A), insbesondere um ein Alkanolamin und speziell um Diethanolamin. Daher werden Flüssigformulierungen umfassend 5-25 Gew.-% Farbstoffzusammensetzung, 1-10 Gew.-%, bevorzugt 4-7 Gew.-% insbesondere 4-6 Gew.-% eines ersten wasserlöslichen Amins speziell Ethanolamin, 0,5-5 Gew.-%, bevorzugt 1,5-3 Gew.-% eines von diesem verschiedenen Amins (A) und 1-25 Gew.-%, bevorzugt 4-15 Gew.-%, insbesondere 4-6 Gew.-% Harnstoff bevorzugt.

Die Farbstoffe können als feuchter Presskuchen oder auch in getrockneter Form eingesetzt werden. In diesem Fall stellt man eine Lösung her, indem man das wasserlösliche Amin, bevorzugt Ethanolamin, und den Harnstoff zusetzt. Bevorzugt setzt man direkt das Reaktionsgemisch der Verrötungsreaktion von Direct Yellow 11 ohne zusätzlichen Isolierungsschritte ein. Bevorzugt setzt man zuerst den Harnstoff der erhaltenen Reaktionsmischung der Verrötungsreaktion von Direct Yellow 11 zu. Anschließend werden dann das wasserlösliche Amin und gegebenenfalls die weiteren Farbstoffe zugesetzt. Das wasserlösliche Amin kann bereits während der Farbstoffsynthese oder zu einem späteren Zeitpunkt zugesetzt werden. Es ist lediglich darauf zu achten, dass die Gesamtmenge von 15 Gew.-% an wasserlöslichem Amin in der Flüssigformulierung nicht überschritten wird.

Weitere Zusätze in der Flüssigformulierung können prinzipiell sein C₁-C₄-Alkanole, z.B. Methanol, Ethanol, Propanol, Isopropanol, Butanol, Isobutanol, sec-Butanol oder tert-Butanol, Carbonsäureamide, wie N,N-Dimethylformamid oder N,N-Dimethylacetamid, Ketone oder Ketoalkohole, wie Aceton, Methylethylketon oder 2-Methyl-2-hydroxypentan-4-on, Mono-, Oligo- oder Polyalkylenglykole oder -thioglykole, die C₂-C₆-Alkyleneinheiten aufweisen, wie Ethylenglykol, 1,2- oder 1,3-Propylenglykol, 1,2-oder 1,4-Butylenglykol, Hexan-1,6-diol, Diethylenglykol, Triethylenglykol, Dipropylenglykol, Thiodiglykol, Polyethylenglykol oder Polypropylenglykol, andere Polyole, wie Glycerin oder Hexan-1,2,6-triol, C₁-C₄-Alkylether von mehrwertigen Alkoholen, wie E-thylenglykolmonomethyl- oder -monoethylether, Diethylenglykolmonomethyl- oder - monoethylether, Diethylenglykolmonobutylether (Butyldiglykol) oder Triethylenglykolmonomethyl- oder -monoethylether, C₁-C₄-Alkylester von mehrwertigen Alkoholen, γ-Butyrolacton oder Dimethylsulfoxid. Geeignete solubilisierende Zusätze sind ferner Lactame, wie ε-Caprolactam, Pyrrolidin-2-on oder N-Methylpyrrolidin-2-on, cyclische Harnstoffe, wie 1,3-Dimethylimidazolidin-2-on oder 1,3-Dimethylhexahydropyrimid-2-on sowie Polyacrylsäuren, Polyacrylsäurederivate, Polyvinylacetate, Polyvinylalkohole, Polyvinylpyrrolidone, Polysiloxane oder Copolymere der jeweiligen Monomere. Desgleichen können Oligomere des Ethylenoxids oder Propylenoxids oder Derivate dieser Oligomere zur Anwendung kommen.

Diese Zusätze können der Flüssigformulierung zugefügt werden, zeigen jedoch keinen nennenswerten Effekt. Ihr Anteil wird daher in der Regel 10 Gew.-%, bezogen auf das Gesamtgewicht der Flüssigformulierung nicht überschreiten und beträgt häufig nicht mehr als 5 Gew.-%. Insbesondere enthalten die erfindungsgemäßen Flüssigformulierungen keine (d.h. <1 Gew.%) derartigen Zusätze. Besonders bevorzugt werden daher wässrige Flüssigformulierungen bestehend aus

| | |
|---|---|
| 15-20 Gew.-% | der Farbstoffzusammensetzung, |
| 1-10 Gew.-% | Ethanolamin, |
| 1-10 Gew.-% | Harnstoff und |
| 0,5-5 Gew.-% | eines von Ethanolamin verschiedenen wasserlöslichen Amins, insbesondere Alkanolamin, speziell Diethanolamin. |

Die erhaltenen Lösungen weisen hervorragende Lagerstabilität auf. Sie ergeben gute Papierfärbungen insbesondere in der Masse.

Die nachfolgenden Beispiele sollen die Erfindung näher erläutern.

### a) Herstellung von verrötetem Direct Yellow 11

Es wurden 1,54 I Wasser vorgelegt und anschließend 1,10 kg *p*-Nitrotoluolsulfonsäure (83 gew.-%ig, 4,21 Mol) eingetragen. Es wurden insgesamt 300 g festes Lithiumhydroxid (56 gew.-%ig, 7 Mol) portionsweise zugesetzt. Anschließend gab man 110 g Diethanolamin zu und rührte 15 h bei 55 °C. Es folgte die Zugabe von einem Liter Wasser. Man rührte für 10 min, setzte 125 g Glucosemonohydrat zu und erwärmte für 2 h auf eine Temperatur von 65 °C. Anschließend wurde mit 18 g Eisessig ein pH-Wert von 9,0 eingestellt. Das Produkt wurde als braun-rote gelartige Substanz erhalten. Es wurden 4,19 kg Produkt erhalten mit einem Farbstoffgehalt von 26,2 %.

### b) Test auf Lagerstabilität

Die verschlossenen Proben wurden jeweils 8 Wochen bei 4°C und 50°C parallel gelagert und anschließend optisch nach folgendem Schlüssel bewertet: 1 = klar; 2 = leichter Belag; 3 = trüb; 4 = schwach ausgefallen; 5 = stark ausgefallen

### c) Herstellung der Flüssigformulierung

### Beispiel 1

53 g des nach a) erhaltenen verröteten Direktgelb 11, 8,3 g Harnstoff, 5,2 g Ethanolamin, 0,55 g Direct Red 239 in Form einer konzentrierten wässrigen Lösung des gemischten Natrium-/Ethanolammoniumsalzes, 3,0 g Direct Blue 279 in Form einer konzentrierten wässrigen Lösung des Triethanolammoniumsalzes sowie 42,7 g Wasser wurden zusammengegeben und 10 min intensiv gerührt. Anschließend wurde die Probe in ein 100 ml Schraubdeckelglas gefüllt und in dieser Form bei der entsprechenden Temperatur für 8 Wochen gelagert. Diese Probe wurde nach 8 Wochen sowohl bei 4°C mit 2 und bei 50°C mit 1 bewertet.

### Beispiel 2 (nicht erfindungsgemäß)

53 g des nach a) erhaltenen verröteten Direktgelb 11, 8,3 g Harnstoff, 5,2 g Ethanolamin, sowie 42,7 g Wasser wurden zusammengegeben und 10 min intensiv gerührt. Anschließend wurde die Probe in ein 100 ml Schraubdeckelglas gefüllt und in dieser Form bei der entsprechenden Temperatur für 8 Wochen gelagert. Diese Probe wurde nach 8 Wochen sowohl bei 4°C als auch bei 50°C mit 1 bewertet.

Analog zu Beispiel 1 wurden Flüssigformulierungen mit den dort aufgeführten Mischungskomponenten hergestellt, wobei Ethanolamin gegen die der Tabelle 1 zu entnehmenden Zusätze ausgetauscht wurde. Die Beispiele 4-9 sind nicht erfindungsgemäße Vergleichsversuche.

**Tabelle 1**

| Bsp. | Zusätze | Lagerungsergebnis nach 8 Wochen | |
|---|---|---|---|
| | | 4 °C | 50°C |
| 3 | Diethylentriamin | 2 | 1 |
| 4 | Propylenglycol | 2 | 5 |
| 5 | Butylglycol | 2 | 5 |
| 6 | Neopentylglycol | 2 | 5 |
| 7 | Phenylglycol | 3 | 5 |
| 8 | N-Methylpyrrolidon | 2 | 5 |
| 9 | Propylencarbonat | 2 | 5 |

Analog zu Beispiel 1 wurden Flüssigformulierungen mit der Tabelle 2 zu entnehmenden Zusammensetzungen hergestellt. Tabelle 3 gibt die gewählten Farbstoffzusammensetzungen wieder. Als Gelbfarbstoff wurde das nach a) hergestellte verrötete Direct Yellow 11 eingesetzt (Farbstoffgehalt 26,2 Gew.-%).

**Tabelle 2**

| Bsp | Farbstoff gesamt [g] | | Harnstoff [g] | | Ethanolamin [g] | | H₂O [g] | Stabilität | |
|---|---|---|---|---|---|---|---|---|---|
| | | | | | | | | 4 °C | 50 °C |
| 10 (nicht erfindungsgemäß) | 11,4 | 14% | 3,3 | 4% | 4,1 | 5% | 31,4 | 1 | 1-2 |
| 11 | 13,7 | 17% | 3,3 | 4% | 4,1 | 5% | 31,4 | 1-2 | 1-2 |
| 12 | 13,8 | 16% | 3,5 | 4% | 4,3 | 5% | 33 | 1-2 | 1-2 |
| 13 (nicht erfindungsgemäß) | 11,5 | 14% | 20 | 24% | 4,2 | 5% | 15 | 1 | 1-2 |
| 14 | 13,8 | 17% | 20 | 24% | 4,2 | 5% | 15 | 1-2 | 1 |
| 15 | 13,9 | 16% | 20 | 24% | 4,4 | 5% | 15,8 | 1-2 | 1-2 |

**Tabelle 3**

| Bsp. | Gelb* | | Rot** | | | Blau*** | | |
|---|---|---|---|---|---|---|---|---|
| 10 (nicht erfindungsgemäß) | 11,3 g | 100% | - | - | 0% | - | | 0% |
| 11 | 11,3 g | 83% | D.R. 239 | 0,72 g | 5% | D.B. 279 | 1,6 g | 12% |
| 12 | 12,0 g | 87% | D.R. 81 | 0,48 g | 3% | D.B. 279 | 1,33 g | 10% |
| 13 (nicht erfindungsgemäß) | 11,5 g | 100% | - | | 0% | - | | 0% |
| 14 | 11,5 g | 83% | D.R. 239 | 0,72 g | 5% | D.B. 279 | 1,6 g | 12% |
| 15 | 12,1 g | 87% | D.R. 81 | 0,48 g | 3% | D.B. 279 | 1,33 g | 10% |

| | | | | | | | | |
|---|---|---|---|---|---|---|---|---|
| *umgerechnet auf den Farbstoffanteil | | | | | | | | |
| **angegeben sind die Menge Farbsäure. D.R. 239 wird als konzentrierte, wässrige Lösung des gemischten Natrium/Ethanolammoniumsalzes zugegeben, D.R. 81 als konzentrierte wässrige Lösung des Triethanolammoniumsalzes | | | | | | | | |
| ***angegeben sind die Menge Farbsäure. D.B. 279 wird als konzentrierte wässrige Lösung des Triethanolammoniumsalzes zugegeben. | | | | | | | | |

## Patentansprüche

1. Wässrige Flüssigformulierung enthaltend
| | |
|---|---|
| 5-25 Gew.-% | einer Farbstoffzusammensetzung umfassend 70-95 Gew.-% eines Farbstoffes erhältlich durch Reduktion oder thermische Behandlung von Direct Yellow 11 und dessen Bunttonwinkel auf gebleichtem Zellstoff im Farbraum im Bereich von 55 bis 75 liegt, |
| | 1-30 Gew.-% eines blauen Direktfarbstoffes und |
| | 0-20 Gew.-% eines roten Direktfarbstoffes |
| | jeweils bezogen auf die Farbstoffzusammensetzung |
| 1-15 Gew.-% | eines gesättigten, cyclischen oder acyclischen wasserlöslichen Amins, das eine primäre, sekundäre oder tertiäre Aminogruppe und wenigstens eine weitere funktionelle Gruppe, ausgewählt unter primären, sekundären und tertiären Aminogruppen, OH-Gruppen und Ethergruppen aufweist und |
| 1-30 Gew.-% | Harnstoff |
bezogen auf das Gesamtgewicht der wässrigen Flüssigformulierung, wobei die Gesamtmenge aus wasserlöslichem Amin und Harnstoff 40 Gew.-% nicht übersteigt.

2. Wässrige Flüssigformulierung nach Anspruch 1, deren Farbstoffzusammensetzung Lithiumsalze des Farbstoffs erhältlich durch Reduktion oder thermische Behandlung von Direct Yellow 11 umfasst.

3. Wässrige Flüssigformulierung nach Anspruch 1 oder 2, deren Farbstoffzusammensetzung 70-95 Gew.-% eines Farbstoffs umfasst, der erhältlich ist durch Umsetzung von Direct Yellow 11 mit einem organischen Reduktionsmittel.

4. Wässrige Flüssigformulierung nach einem der Ansprüche 1 bis 3, deren Farbstoff erhältlich ist durch Umsetzung von Direct Yellow 11 mit 0,05 bis 0,3 Mol Hydroxyaldehyd pro Mol eingesetzte 5-Nitro-o-toluolsulfonsäure.

5. Wässrige Flüssigformulierung nach einem der Ansprüche 1 bis 4, deren Direct Yellow 11 erhältlich ist durch Umsetzen von einem Mol Nitrotoluolsulfonsäure mit 1,4 bis 1.8 Mol Lithiumhydroxid, Zugabe von 0,1 bis 0,5 Mol eines Alkanolamins, Erwärmen des Reaktionsgemisches auf 40 bis 80°C und anschließendem Neutralstellen.

6. Wässrige Flüssigformulierung nach einem der Ansprüche 1 bis 5 umfassend
| | |
|---|---|
| 10-25 Gew.-% | Farbstoffzusammensetzung |
| 2-10 Gew.-% | wasserlösliches Amin und |
| 1-25 Gew.-% | Harnstoff. |

7. Wässrige Flüssigformulierung nach einem der Ansprüche 1 bis 6 umfassend
| | |
|---|---|
| 5-25 Gew.-% | Farbstoffzusammensetzung |
| 1-10 Gew.-% | wasserlösliches Amin |
| 0,5-5 Gew.-% | eines von diesem verschiedenen wasserlöslichen Amins (A) und |
| 1-25 Gew.-% | Harnstoff. |

8. Wässrige Flüssigformulierung nach einem der Ansprüche 1 bis 7 umfassend
| | |
|---|---|
| 5-25 Gew.-% | Farbstoffzusammensetzung |
| 1-10 Gew.-% | Ethanolamin |
| 0,5-5 Gew.-% | eines von Ethanolamin verschiedenen Alkanolamins und |
| 1-25 Gew.-% | Harnstoff. |

9. Verwendung der wässrigen Flüssigforrnuliemng gemäß den Ansprüchen 1-8 zum Färben von Papier und Karton.

## Claims

1. An aqueous liquid formulation comprising
| | |
|---|---|
| 5-25% by weight | of a dye composition comprising |
| | 70-95% by weight of a dye obtainable by reduction or thermal treatment of Direct Yellow 11 and having a hue angle on bleached cellulose in the range from 55 to 75 in the color space, |
| | 1-30% by weight of a blue direct dye and |
| | 0-20% by weight of a red direct dye |
| | (all based on the dye composition) |
| 1-15% by weight | of a saturated, cyclic or acyclic water-soluble amine comprising a primary, secondary or tertiary amino group and at least one further functional group selected from primary, secondary and tertiary amino groups, OH groups and ether groups, and |
| 1-30% by weight | of urea |
based on the total weight of the aqueous liquid formulation, wherein the total amount of water-soluble amine and urea does not exceed 40% by weight.

2. The aqueous liquid formulation according to claim 1 whose dye composition comprises lithium salts of the dye obtainable by reduction or thermal treatment of Direct Yellow 11.

3. The aqueous liquid formulation according to claim 1 or 2 whose dye composition comprises 70-95% by weight of a dye obtainable by reaction of Direct Yellow 11 with an organic reducing agent.

4. The aqueous liquid formulation according to any one of claims 1 to 3 whose dye is obtainable by reaction of Direct Yellow 11 with 0.05 to 0.3 mol of hydroxyaldehyde per mole of 5-nitro-o-toluenesulfonic acid used.

5. The aqueous liquid formulation according to any one of claims 1 to 4 whose Direct Yellow 11 is obtainable by reacting one mole of nitrotoluenesulfonic acid with 1.4 to 1.8 mol of lithium hydroxide, adding 0.1 to 0.5 mol of an alkanolamine, heating the reaction mixture to 40-80°C and subsequent neutralizing.

6. The aqueous liquid formulation according to any one of claims 1 to 5 comprising
| | |
|---|---|
| 10-25% by weight | of dye composition |
| 2-10% by weight | of water-soluble amine and |
| 1-25% by weight | of urea. |

7. The aqueous liquid formulation according to any one of claims 1 to 6 comprising
| | |
|---|---|
| 5-25% by weight | of dye composition |
| 1-10% by weight | of water-soluble amine |
| 0.5-5% by weight | of a different water-soluble amine (A) and |
| 1-25% by weight | of urea. |

8. The aqueous liquid formulation according to any one of claims 1 to 7 comprising
| | |
|---|---|
| 5-25% by weight | of dye composition |
| 1-10% by weight | of ethanolamine |
| 0.5-5% by weight | of an alkanolamine other than ethanolamine and |
| 1-25% by weight | of urea. |

9. A use of the aqueous liquid formulation according to claims 1-8 for dyeing paper and board.

## Revendications

1. Composition liquide aqueuse contenant
| | |
|---|---|
| 5-25 % en poids | d'une composition de colorants comprenant |
| 70-95 % en poids | d'un colorant pouvant être obtenu par réduction ou traitement thermique de Direct Yellow 11 et dont l'angle de teinte sur cellulose décolorée se situe dans la plage de 55 à 75 dans l'espace chromatique, |
| 1-30 % en poids | d'un colorant direct bleu et |
| 0-20 % en poids | d'un colorant direct rouge chaque fois par rapport à la composition de colorants |
| 1-15 % en poids | d'une amine saturée, cyclique ou acyclique, hydrosoluble, qui comporte un groupe amino primaire, secondaire ou tertiaire et au moins un autre groupe fonctionnel, choisi parmi des groupes amino primaires, secondaires et tertiaires, des groupes OH et des groupes éther et |
| 1-30 % en poids | d'urée |
par rapport au poids total de la composition liquide aqueuse, la quantité totale d'amine hydrosoluble et d'urée n'excédant pas 40 % en poids.

2. Composition liquide aqueuse selon la revendication 1, dont la composition de colorants comprend des sels de lithium du colorant pouvant être obtenu par réduction ou traitement thermique de Direct Yellow 11.

3. Composition liquide aqueuse selon la revendication 1 ou 2, dont la composition de colorants comprend 70-95 % en poids d'un colorant qui peut être obtenu par mise en réaction de Direct Yellow 11 avec un réducteur organique.

4. Composition liquide aqueuse selon l'une quelconque des revendications 1 à 3, dont le colorant peut être obtenu par mise en réaction de Direct Yellow 11 avec 0,05 à 0,3 mole d'hydroxyaldéhyde par mole d'acide 5-nitro-o-toluènesulfonique utilisé.

5. Composition liquide aqueuse selon l'une quelconque des revendications 1 à 4, dont le colorant Direct Yellow 11 peut être obtenu par mise en réaction d'une mole d'acide nitrotoluènesulfonique avec 1,4 à 1,8 mole d'hydroxyde de lithium, addition de 0,1 à 0,5 mole d'une alcanolamine, chauffage du mélange réactionnel à une température de 40 à 80 °C et neutralisation subséquente.

6. Composition liquide aqueuse selon l'une quelconque des revendications 1 à 5, comprenant
| | |
|---|---|
| 10-25 % en poids | de composition de colorants |
| 2-10 % en poids | d'amine hydrosoluble et |
| 1-25 % en poids | d'urée. |

7. Composition liquide aqueuse selon l'une quelconque des revendications 1 à 6, comprenant
| | |
|---|---|
| 5-25 % en poids | de composition de colorants |
| 1-10 % en poids | d'amine hydrosoluble |
| 0,5-5 % en poids | d'une amine hydrosoluble (A) différente de celle-ci et |
| 1-25 % en poids | d'urée. |

8. Composition liquide aqueuse selon l'une quelconque des revendications 1 à 7, comprenant
| | |
|---|---|
| 5-25 % en poids | de composition de colorants |
| 1-10 % en poids | d'éthanolamine |
| 0,5-5 % en poids | d'une alcanolamine différente de l'éthanolamine et |
| 1-25 % en poids | d'urée. |

9. Utilisation de la composition liquide aqueuse selon les revendications 1-8, pour la coloration du papier et du carton.
